# EUROPÄISCHE PATENTSCHRIFT

(11) **EP 0 611 895 B1**
(45) Veröffentlichungstag und Bekanntmachung des Hinweises auf die Patenterteilung: **22.05.1996**
(21) Anmeldenummer: 94101583.6
(22) Anmeldetag: 03.02.1994
(51) Int. Cl.: F16D 3/72, F16D 3/77, F16D 3/79

(54) **Doppelmembrankupplung**
Double membrane shaft coupling
Accouplement d'arbres à membrane double

(30) Priorität: 16.02.1993 DE 4304611
(43) Veröffentlichungstag der Anmeldung: 24.08.1994
(73) Patentinhaber: CENTA-ANTRIEBE KIRSCHEY GmbH, D-42781 Haan (DE)
(72) Erfinder: Kirschey, Gerhard, Dipl.-Ing., D-42329 Wuppertal (DE)
(74) Vertreter: Patentanwälte Ostriga & Sonnet

(56) Entgegenhaltungen:
- DE-U- 8 434 950
- DE-U- 8 606 870
- DE-U- 9 302 185
- FR-A- 1 426 477
- FR-A- 2 550 289
- US-A- 2 883 839

## Beschreibung

Die Erfindung bezieht sich auf eine Wellenkupplung zum Ausgleich radialer, axialer und winkliger Verlagerungen der angeschlossenen Wellen, mit wenigstens einem biegeelastischen Ausgleichselement in Form einer aus zwei in Serie geschalteten scheiben- bzw. ringförmigen, an ihren Außenumfangsbereichen lösbar miteinander verbunden Membranen dadurch gebildeten Tandemmembran, daß die in Axialrichtung der Kupplung im wesentlichen parallel zueinander angeordneten Membranen an einem Außenumfangsbereich fest miteinander verbunden und mit ihrem jeweiligen Innenumfangsbereich an eines der beiden relativ zueinander verlagerbaren Maschinenelemente angeschlossen sind.

Eine solche Membrankupplung zählt zur Kupplungsgattung der drehstarren, biegenachgiebigen Ganzmetallkupplungen und besteht in der Regel aus blechförmigen, innen- und außen befestigten Ringen, die sich bei Wellenfluchtfehlern axial oder winklig verformen können. Einen schematischen Überblick über Bauarten und Eigenschaften solcher Kupplungen geben K. Ehrenspiel und G. Henkel in VDI-Berichte Nr. 299, 1977, S. 161.

Die vorliegende Erfindung betrifft in erster Linie eine solche Membrankupplung, wie sie in der Literaturstelle (a.a.O. Seite 162) als Doppelkupplung mit außen angeordnetem Mittelstück bezeichnet ist. Dadurch werden zwei Maschinenelemente wie Wellen axial, winklig und radial verlagerbar durch die beiden mit Hilfe des Mittelstücks in Serie bzw. hintereinander geschalteten Einzelmembranen gekuppelt. Durch Serienschaltung der Membranen erhöht sich der zulässige Winkel- und Axialversatz proportional zur Zahl der Membranen. Außerdem ist bei dieser Bauform von Vorteil, daß der Verbindungsbereich am sogenannten Mittelstück im wesentlichen frei von Zwangskräften ist, da dieser Bereich gewissermaßen radial atmen kann.

Die Aufgabe der Erfindung besteht nun im wesentlichen darin, Mittel und Wege aufzuzeigen, die es ermöglichen, eine Tandemmembran-Kupplung in Axialrichtung möglichst kurz auszuführen. Außerdem soll die Möglichkeit geschaffen werden, Teile der Kupplung, so insbesondere das Verbindungsstück oder -rohr einer mit Hilfe von Membrankupplungsgliedern aufgebauten Gelenkwelle, im Schadensfall radial ausbauen und auswechseln zu können, also ohne die Wellen bzw. Maschinenaggregate, an denen die Kupplung angebracht ist, axial auseinanderrücken zu müssen.

Die Grundlage dieser Problemlösung ist im Kennzeichenteil des Anspruches 1 angegeben und besteht im wesentlichen darin, daß wenigstens eine der beiden Membranen einer Tandemmembran mittels einer axialverspannbaren Spannbuchsenanordnung an das zugehörige Kupplungsteil wie Nabe, Flansch od.dgl. angeschlossen ist und daß die Spannbuchsen jeweils einen Hülsenabschnitt und einen endseitig daran angeformten flachen Anschlagbund aufweisen und axial derart in Bohrungen der Membran eingesetzt sind, daß ihre Anschlagbunde auf der zur anderen Membran weisenden Seite liegen.

Der Anschluß der Membranen oder wenigstens einer Membran einer Tandemmembran hat zunächst den erheblichen Vorteil, daß auf der der anderen Membran zugekehrten Innenseite der einen Membran lediglich der flache und somit axial sehr kurz bauende Anschlagbund auf der inneren Oberfläche der Membran vorsteht. Deshalb können die beiden Membranen einer Tandemmembran bei einem vorgegebenem notwendigen Axialverlagerungsweg besonders dicht angeordnet werden Aus der Tatsache, daß der Anschlagbund der Spannbuchse auf der Membraninnenseite zu liegen kommt, ergibt sich daraus, daß die Spannschraube in Axialrichtung der Kupplungsanordnung von der Außenseite der Tandemmembran her zu betätigen ist. Damit wird eine wesentliche Voraussetzung dafür geschaffen, die Tandemmembran mit den Maschinenteilen, an denen sie anzuschließen ist, auf besonders einfache Weise vornehmen zu können. Entsprechend einfach kann sich das Auswechseln einer Tandemmembran im Schadensfall gestalten.

In konkreter Ausgestaltung ist es vorteilhaft, wenn jede Spannbuchse ein Innengewinde zur verstellbaren Aufnahme einer Spannschraube aufweist und ihr Mantel mit einer Spannhülsenaufnahme, gegen die sich der Kopf der Spannschraube mindestens mittelbar druckschlüssig abstützt, eine spielfreie Passung bildet.

Die Spannhülsenaufnahmen können unmittelbar in dem zugehörigen Kupplungsteil, z.B. einem Nabenflansch, selbst ausgebildet sein oder auch in einer als Abstandshalter zwischen Membran und Kupplungsteil dienenden und mittels der Spannschrauben am Kupplungsteil verspannbaren Ringscheibe ausgebildet sein.

Die radial inneren Spannschrauben der beiden Einzelmembrane einer Tandemmembran können auf derart unterschiedlichen Teilkreisen angeordnet sein, daß auf zueinander weisenden Membranseiten derselben Tandemmembran befindliche Teile der Membran Befestigungsmittel keine Überdeckung in Radialrichtung aufweisen. Bei einer solchen Anordnung können die Membranen einer Tandemmembran mit besonders geringem Abstand zueinander angeordnet werden, da im Zwischenraum zwischen den Einzelmembranen nur die Anschlagbunde der Spannbuchsen der einen Membranbefestigung angeordnet sind und nur diese bei der Auslegung der Kupplung so zu berücksichtigen sind, daß bei maximaler Auslenkung eine Berührung mit der anderen Membran ausgeschlossen ist.

Bei einer Wellenkupplung in Gestalt einer Gelenkwelle mit einem insbesondere rohrförmigen Verbindungsstück zwischen zwei Kupplungsanordnungen ist es in diesem Zusammenhang vorteilhaft, wenn die an dem Verbindungsstück angeschlossenen Membranen gegenüber den jeweils beiden anderen Membranen die radial weiter innen angeordneten Anschlußbereiche aufweisen.

Der erörterte Radialversatz der inneren Membranbefestigungsmittel ist nicht zwingend notwendig, um den Membranen der Tandemmembran maximalen Bewegungsspielraum bei dichtestmöglicher Zuordnung der Einzelmembranen zu gestatten. Eine Alternativlösung dieses Aspektes besteht deshalb gemäß einem weiteren Merkmal der Erfindung darin, daß die beiden Einzelmembranen einer Tandemmembran im wesentlichen gleiche Radialabmessungen und die zugeordneten Spannschrauben dementsprechend auf im wesentlichen gleichen Teilkreisen liegen, diese jedoch in Umfangsrichtung derart gegeneinander versetzt angeordnet sind, daß auf zueinander weisenden Membranseiten derselben Tandemmembran befindliche Teile der Membranbefestigungsmittel keine Überdeckung in Umfangsrichtung aufweisen. Bei dieser Ausgestaltung wird die möglichst dichte Zuordnung der Einzelmembranen dadurch erreicht, daß - in Umfangsrichtung betrachtet - die Membranbefestigungsmittel an den Innenumfangsbereichen der Membranen - in Umfangsrichtung betrachtet - alternierend auf "Lücke" angeordnet sind. Auch hier können sich also trotz sehr dichter Zuordnung der einzelnen Membranen keine gegenüberliegenden Membranbefestigungsmittel behindern.

Werden mit Hilfe einer Membrankupplung zwei Wellen - ggf. über Naben - unmittelbar miteinander gekuppelt, führt ein Bruch einer Membran zum Ausfall der Kupplung; umherfliegende Kupplungsteile sind hier aber nur dann zu erwarten, wenn beide Membranen gleichzeitig brechen, was selten eintreten dürfte. Wesentlich problematischer äußert sich dieser mögliche Schadensfall bei Gelenkwellen mit zentralem Verbindungsrohr zwischen zwei Kupplungsanordnungen. Da dieses Verbindungsrohr nicht an einer Aggregatwelle, einem Schwungrad od.dgl. befestigt ist, kann es sich bei einem Membranbruch aus dem Kupplungsverbund lösen und schwere Schäden anrichten. Im Rahmen der Erfindung ist hier eine sehr einfache Lösung möglich, die Folgen eines solchen Kupplungsschadens ohne nennenswerten baulichen Aufwand zu mindern. Dies schafft die Erfindung dadurch, daß wenigstens einige der Spannschrauben, insbesondere der am Verbindungsstück angreifenden Spannschrauben, einen verlängerten Schraubenschaft aufweisen, der in Axialüberdeckung mit einem radial außen liegenden Überdeckungsabschnitt des an der anderen Membran angeschlossenen Kupplungsteiles tritt. Diese Lösung ist insbesondere dann zweckmäßig und vorteilhaft, wenn die beiden Membranen einer Tandemmembran eine unterschiedliche radiale Ausdehnung besitzen. Bei identischen Membranen, deren inneren Befestigungsmittel alle auf gleichen Teilkreisen liegen, ist eine Alternativlösung aber auch möglich, die darin besteht, daß das an der anderen Membran angeschlossene Kupplungsteil mit Ausnehmungen bzw. Bohrungen zum freien Eingriff der verlängerten Schraubenschäfte versehen ist. Hier sind die mit der Membrankupplung verbundenen Kupplungsteile sogar bei einem Lamellenbruch noch formschlüssig auf Drehmitnahme miteinander verbunden, so daß ein solches Kupplungssystem allein durch die Anordnung der verlängerten Schraubenschäfte und der zugehörigen Aufnahmen Notlaufeigenschaften besitzt.

Die Erfindung versteht sich im übrigen am besten anhand der nachfolgenden Beschreibung mehrerer in den Zeichnungen dargestellter Ausführungsbeispiele. In den Zeichnungen zeigen:
- Fig. 1: eine Tandemmembrankupplung in Verbindung mit einer hochdrehelastischen Gummiringkupplung,
- Fig. 1a: eine Einzelheit der inneren Befestigung der beiden Membranen an der Gummiringkupplung einerseits und einer Nabe andererseits,
- Fig. 2: eine Gelenkwelle mit zwei Naben und einem rohrförmigen Zwischenstück unter Verwendung zweier Tandemmembrananordnungen, wobei zugleich zwei unterschiedliche Membranbefestigungsmöglichkeiten dargestellt sind, von denen
- Fig. 2a: in vergrößertem Maßstab Befestigungsanordnungen auf radial unterschiedlichen Teilkreisen und
- Fig. 2b: ebenfalls in vergrößerter Darstellung die Umfangs-Abwicklung der inneren Membranbefestigungsbereiche zeigt, deren Befestigungsmittel auf denselben Teilkreisen angeordnet sind, und
- Fig. 3: eine Doppelmembran-Gelenkwelle etwa der Art nach Fig. 2 in Verbindung mit einer hoch drehelastischen Gummiringkupplung ähnlich der in Fig. 1 dargestellten.

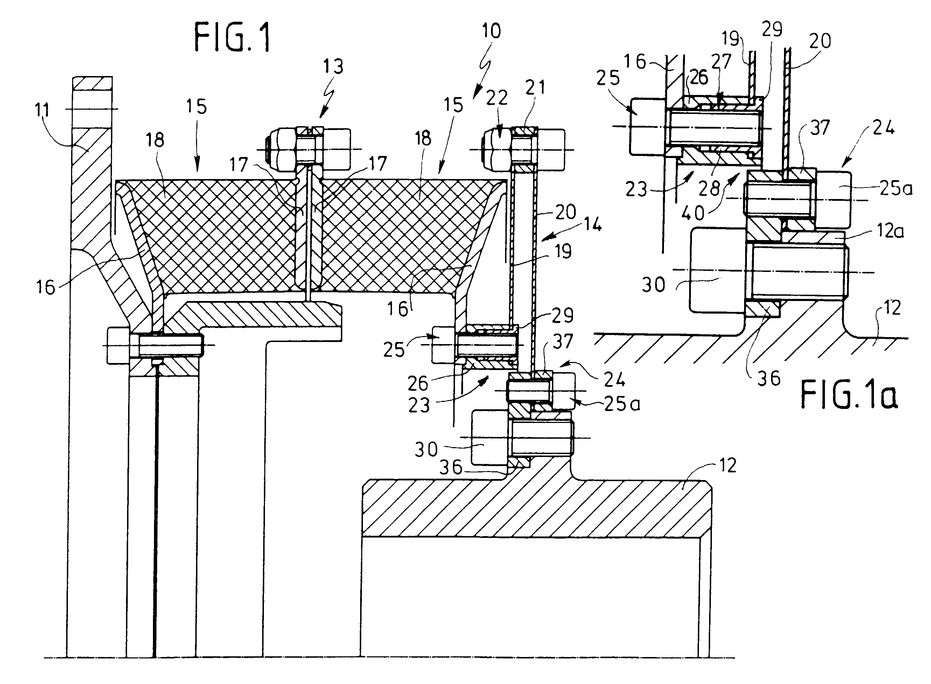

Die in Fig. 1 insgesamt mit 10 bezeichnete Wellenkupplung dient zum Ausgleich radialer, axialer und winkliger Verlagerungen der - nicht dargestellten - angeschlossenen Wellen. Eine dieser Wellen ist mit einem Antriebsflansch 11 und die andere mit einer Nabe 12 jeweils mindestens mittelbar drehfest verbunden. Als Kupplungselemente sind bei diesem Ausführungsbeispiel - ausgehend von der Antriebsseite - zunächst eine hoch drehelastische Gummiringkupplung 13 und dazu in Serie geschaltet eine drehstarre Membrankupplung 14 zum Ausgleich radialer, axialer und winkliger Verlagerungen zwischen den Teilen 11 und 12 vorgesehen.

Die hoch drehelastische Gummiringkupplung 13 besteht aus zwei mit 15 bezeichneten, axial hintereinandergeschaltenen Elementen, wie sie von der Anmelderin unter der Bezeichnung CENTAX-Elemente hergestellt und vertrieben werden. Jedes dieser CENTAX-Elemente besteht aus zwei Flanschen 16 und 17 aus Qualitätsstahl mit einem jeweils dazwischen anvulkanisierten, hochelastischen Kautschukring 18.

Die Membrankupplung 15 besteht aus zwei Membranen 19 und 20 in Tandemanordnung. Im unbelasteten Zustand sind diese Membranen 19 und 20 in Axialrichtung der Kupplungsanordnung parallel hintereinander angeordnet. Verbunden sind sie an ihren Außenumfängen mittels zahlreich über den Umfang verteilter Schraubverbindungen 22, deren Schraubenschäfte ein Vielzahl von Distanzbuchsen 21 oder Bohrungen eines umlaufenden Distanzringes sowie die Membranen durchsetzenden. Die eine Membran 19 ist an ihrem Innenumfangsbereich mit der drehelastischen Kupplung 13 und somit mit dem Maschinenteil 11, die zweite Membran 20 mit der Nabe 12 verbunden. An den Flansch 16 der Kupplung 13 ist mit Hilfe einer ersten Verbindungsanordnung 23 die Membran 19 angeschlossen und mit der Nabe 12 über eine zweite Verbindungsanordnung 24 die Membran 20 fest verbunden. Zu jeder Befestigungsanordnung gehört eine Vielzahl von axial gerichteten, über den Innenumfang der Membranen 19 und 20 gleichmäßig verteilt angeordneter Spannschrauben 25 bzw. 25a.

Die Verbindungsanordnung 23, mit der die erste Membran 19 an den Flansch 16 der elastischen Kupplung 13 angebracht ist, umfaßt außerdem eine Ringscheibe 26, die zugleich als Distanzring zwischen Flansch 16 und Membran 19 dient. Dieser Ring 26 weist eine der Anzahl der Spannschrauben 25 entsprechende Zahl von Stufenbohrungen auf, deren verjüngter Abschnitt jeweils auf der von der zweiten Membran 20 wegweisenden Seite angeordnet ist und dem axialen Durchtritt des Gewindeschaftes der zugeordneten Spannschraube 25 dient. Der wie ersichtlich erweiterte Abschnitt der Stufenbohrung dient der Aufnahme einer Spannbuchse 27, die einen Hülsenabschnitt 28 und einen sehr niedrigen bzw. flachen Anschlagbund 29 aufweist. Die Außenmantelfläche des Hülsenabschnittes 28 bildet mit der Innenmantelfläche der zugeordneten Bohrung innerhalb des Distanzringes 26 eine zylindrische, spielfreie Passung aus. Außerdem ist die Spannbuchse 27 mit einem durchgehenden Innengewinde versehen, mit dem der Gewindeschaft der Schraube 25 zusammenwirkt.

Wie insbesondere aus Fig. 1a deutlich hervorgeht, wird die Membran 19 im Bereich ihres Innenumfangs an dem Flansch 16 der elastischen Kupplung 13 also durch die axial verspannbare Spannbuchsenanordnung befestigt. Dabei zieht jede Schraube bei ihrer Betätigung den Anschlagbund 29 der Spannhülse 27 gegen die Innenseite der Membran 29 und spannt diese fest zwischen sich und den Distanzring 26, an dem sich die Köpfe der Spannschrauben 25 mittelbar, und zwar hier unter Zwischenschaltung des Flansches 16 der elastischen Kupplung, abstützen.

Bei dem in den Fig. 1 und 1a dargestellten Ausführungsbeispiel weicht die Befestigungsanordnung 24 von der soeben erläuterten Befestigungsanordnung 23 ab. Hier ist zur Verbindung der zweiten Membran 20 mit einem Flansch 12a der Nabe 12 zwar auch eine axial verspannbare Befestigung vorgesehen, jedoch wie folgt: An den Nabenflansch 12a ist aus montagetechnischen Gründen zunächst mit Hilfe von Schrauben 30 ein Befestigungsring 36 zentriert angeschraubt. Dieser Ring 36 ist mit einer Vielzahl von auf einem Teilkreis angeordneter Gewindebohrungen versehen zum Eingriff der Schrauben 25a, die Bohrungen im Innenumfangsbereich der Membran 20 und auf der dem Ring 36 abgewandten Seite noch Buchsen 37 durchgreifen, an denen sich die Köpfe der Spannschrauben 12a abstützen. Somit wird auch die Membran 20 mit Hilfe einer Reib- bzw. Klemmschlußverbindung fest mit der Nabe 12 verbunden.

Wie aus den Fig. 1 und 1a weiter klar ersichtlich ist, überdecken sich die beiden Membranen 19 und 20 in ihrem jeweiligen Außenumfangsbereich, jedoch ist die Membran 19 deutlich kürzer als die Membran 20. Der dadurch hervorgerufene radiale Versatz der Innenumfangsbereiche von Membran 19 und Membran 20 führt dazu, daß die inneren Befestigungsbereiche der Membran 19 einerseits und der Membran 20 andererseits radial derart versetzt sind, daß sie keine Überdeckung in Radialrichtung aufweisen. Zwischen den Membranen 19 und 20 befindet sich lediglich der schmale Anschlagbund 29 der Spannbuchse 27. Unter Berücksichtigung des notwendigen Bewegungsspiels der beiden Membranen 19 und 20 relativ zueinander können die Membranen daher besonders dicht beieinander angeordnet werden.

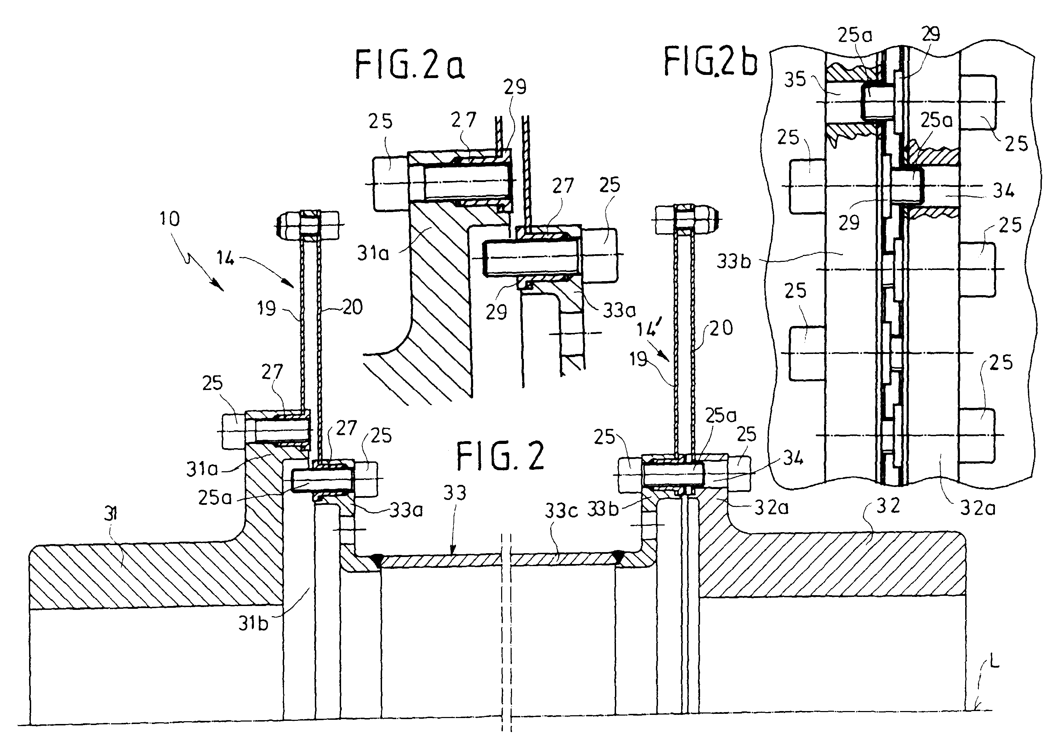

Fig. 2 zeigt eine Gelenkwellenanordnung unter Einschluß zweier Naben 31 und 32 und eines dieses verbindenden rohrförmigen Zwischenstücks 33, an welches die beiden Naben 31 und 32 jeweils mittels einer Membrankupplung 14 bzw. 14' angeschlossen sind. Grundsätzlich wird man natürlich eine solche Gelenkwellenanordnung vorzugsweise mit zwei identischen Membrankupplungen 14 oder 14' ausrüsten. Die Zeichnung dient jedoch gleichzeitig zur Erläuterung zwei verschiedener Befestigungsprinzipien für die jeweiligen Membranen 19 und 20.

Die Membrankupplung 14 und ihre Befestigung an einem Flansch 31a der Nabe 31 und einem Flansch 33a, der mit einem Rohr 33c des Zwischenstücks 33 verschweißt ist, ist prinzipiell ähnlich der anhand von Fig. 1 erläuterten Membrankupplung 14 aufgebaut und angeordnet. Hier aber ist sowohl die Membran 19 als auch die Membran 20 am zugehörigen Kupplungsteil 31 bzw. 33 jeweils mittels Spannbuchsen 27 befestigt. Die Spannbuchsenaufnahmen sind als Stufenbohrung im zugehörigen Nabenflansch 31 bzw. Rohrflansch 33a jedoch unmittelbar eingearbeitet. Außerdem stützt sich der Kopf der jeweiligen Spannschraube 25 auch unmittelbar auf den von den Membranen 19 und 20 wegweisenden Außenseiten der Flansche 31a und 33a druckschlüssig ab.

Wie beim Ausführungsbeispiel der Fig. 1 weisen die Membranen 19 und 20 unterschiedliche Radialabmessungen auf, so daß die Teilkreise, auf denen die inneren Befestigungsmittel für die Membranen 19 und 20 angeordnet sind, einen radialen Versatz aufweisen. Dieser ist gerade so groß, daß die über die Membrankupplung 14 miteinander gekuppelten Maschinenteile, insbesondere also die Flansche 31a und 33a, in radial überlappende Zuordnung treten können, ohne sich zu berühren.

Bei der zweiten in Fig. 2 dargestellten Membrankupplung 14' besitzen beide Membranen 19 und 20 dieselben radialen Abmessungen, weshalb die Teilkreise der Befestigungsmittel, mit denen die Membran 19 am Rohrflansch 33b und die Membran 20 am Nabenflansch 32a angeschlossen, von der Längsmittelachse L des Kupplungssystems gleich beabstandet sind. Hier ist, wie die in Ansicht und teilweise im Schnitt wiedergegebene Abwicklung des inneren Membranbefestigungsbereichs anhand von Fig. 2b zeigt, die Anordnung so getroffen, daß die Membranbefestigungsmittel für die Membran 19 mit denen für die Membran 20 in Umfangsrichtung auf Lücke angeordnet sind. Für den minimal zulässigen Abstand der Membranen 19 und 20 voneinander unter Berücksichtigung der betriebsmäßig auftretenden Verlagerungen ist daher also auch hier nur die - geringe - Höhe des Anschlagbundes 29 der jeweiligen Spannbuchse 27 zu berücksichtigen.

Bei Gelenkwellen der in Fig. 2 dargestellten Art sind die Naben 31 und 32 an den zugehörigen Wellen der miteinander zu kuppelnden Aggregate fest angeschlossen, wohingegen das Verbindungsstück 33 nur über die jeweiligen Membrankupplungen 14 und 14' damit verbunden ist. Führt es im Betrieb zum Bruch einer Membran, könnte sich daher bei dieser Anordnung das Verbindungsstück 33 verselbständigen und durch herumfliegende Teile großen Schaden anrichten. Um solches zu verhindern, ist es allgemein bekannt, mit Hilfe spezieller Führungsflansche an den Naben 31 und 32 eine Art Käfig auszubilden, der zwar den Ausfall der Kupplung in einem solchen Falle nicht verhindern, wohl aber die Verbindungswelle 33 zurückhalten kann.

Das erfindungsgemäße Grundprinzip ermöglicht nun eine ganz besonders einfache Realisierung eines solchen Ausschleuderschutzes. Dieser wird nämlich lediglich dadurch geschaffen, daß jeweils wenigstens einige Spannschrauben 25 mit verlängerten Schraubenschäften 25a verwendet werden, die radial von dem anderen an die Kupplung angeschlossenen Kupplungsteil überdecken werden. So ragen verlängerte Schraubenschäfte 25a aller oder einiger (mindestens dreier) dem Rohrflansch 33a zugeordneten Spannschrauben 25 in den glockenartigen Flanschabschnitt 31b des Nabenflansches 31a hinein. Der Ausschleuderschutz ist hier also lediglich dadurch bewirkt, daß man Spannschrauben 25 mit verlängerten Schraubenschäften derjenigen Membran - hier der Membran 20 - zuordnet, deren Befestigungsbereich radial weiter innen angeordnet ist als der Befestigungsbereich der anderen Membran.

Dieselbe einfache Lösung läßt sich auch realisieren, wenn die Befestigungsmittel für die Membranen 19 und 20 auf denselben Teilkreisen liegen, wie dies anhand der Membrankupplung 14' verdeutlicht ist. In diesem Falle befinden sich die dem Rohrflansch 33b zugeordneten Spannschrauben 25 in Überdeckung zum Nabenflansch 32a der Nabe 32. Dieser Nabenflansch 32a ist deshalb mit Ausnehmungen in Gestalt von Bohrungen 34 versehen, in die die verlängerten Schraubenschäfte 25a von Schrauben 25 eingreifen können, mit denen die Membran 19 am Rohrflansch 33b befestigt ist.

Alternativ oder kumulativ können auch verlängerte Schäfte der dem Nabenflansch 32a zugeordneten Spannschrauben 25 in entsprechende Bohrungen 35 eingreifen, die in dem Rohrflansch 33b angebracht sind (vgl. Fig. 2b oben links). Wichtig ist in jedem Fall, daß die lichte Weite der betreffenden Aufnahmebohrungen 34 und 35 für die verlängerten Schraubenschäfte 25a so bemessen ist, daß die Schraubenschäfte 25a mit hinreichend freiem Spiel dort eintreten können, da eine Behinderung unter betriebsmäßigen Bedingungen der Kupplung selbstverständlich ausgeschlossen werden muß. Wesentlich ist, daß eine Kupplung mit dieser Art Schleuderschutz sogar recht brauchbare Notlaufeigenschaften für den Fall eines Membranbruchs aufweist, denn wie insbesondere Fig. 2a sehr deutlich zeigt, bilden die verlängerten Schraubenschäfte 25a der Spannschrauben mit den Bohrungen 34 und/oder 35, sobald eine Membran gebrochen ist und keine Kräfte mehr übertragen kann, eine Klauenkupplung aus, die eine Drehmomentübertragung weiterhin gewährleisten kann.

Auch bei der Ausführung ensprechend Fig. 1 ist im übrigen ein Ausschleuderschutz realisiert, und zwar dadurch, daß sich die mit 26 und 36 bezeichneten Ringkörper radial und axial überlappen, sich also an der mit 40 bezeichneten Stelle (Fig. 1a) im Sinne eines Ausschleuderschutzes überfangen.

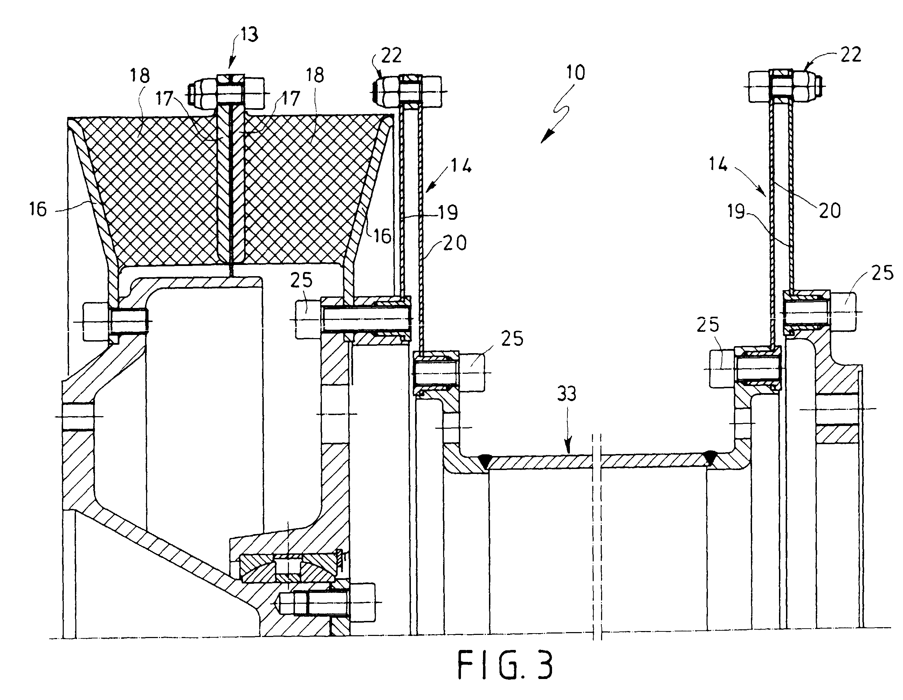

Das schließlich in Fig. 3 dargestellte weitere Ausführungsbeispiel ist in etwa eine Kombination aus einer hoch drehelastischen Gummiringkupplung 13 entsprechend derjenigen in Fig. 1 und einer Gelenkwellenanordnung unter Verwendung zweier Membrankupplungen 14 sowie einem dazwischen geschalteten Verbindungsstück 33. In dieser Zeichnung sind übersichtshalber jeweils nur die wesentlichsten Einzelteile des Kupplungssystems mit Bezugszeichen versehen. Eine besondere Beschreibung ist entbehrlich, da sich alle Einzelheiten aus den zuvor beschriebenen Ausführungsbeispielen von selbst verstehen.

Im übrigen lassen die Zeichnungen gut erkennen, daß das jeweilige Kupplungssystem besonders leicht montierbar und demontierbar ist, wobei der problemlose Ein- und Ausbau insbesondere des Zwischenstücks 33 hervorzuheben ist. Dies resultiert zum einen daraus, daß alle Spannschrauben 25 axial ausgerichtet und gut, wenn nicht gar völlig frei, zugänglich sind und daß alle mit einem Zwischenstück 33 verbundenen Teile frei zwischen den übrigen Kupplungsteilen liegen, so daß das Zwischenstück ausgebaut oder eingesetzt werden kann, ohne die sonstigen Maschinenteile in Axialrichtung auseinanderrücken zu müssen.

Die Tatsache, daß die Passung zwischen dem Außenmantel des Hülsenabschnitts 28 einer Spannbuchse 27 und der Spannbuchsenaufnahme - gleichgültig, ob diese in einem Ringkörper wie dem Distanzring 26 oder unmittelbar in einem Flansch wie z.B. dem Nabenflansch 31a ausgebildet ist - spielfrei ist, hat den erheblichen Vorteil, daß auch die Spannbuchse 27 selbst zur Drehmomentübertragung herangezogen wird. Dies sei am Beispiel der Membran 19 in Fig. 1a wie folgt erläutert:

Das eingeleitete Drehmoment wird über den Distanzring 26 zu einem Teil reibschlüssig direkt auf die (linke) Außenseite der Membran 19 übertragen, zum Teil aber auch über den Formschluß der genannten spielfreien Passung auf die (rechte) Innenseite der Membran 19, so daß dort zusätzlich der Reibschluß zwischen der Membran 19 und dem Anschlagbund 29 der Spannhülse 27 wirkt. Die Normalkraft jeder Spannschraube 25 wird mithin zweimal in Reibschluß umgesetzt, und zwar jeweils zum Teil auf jeder der beiden Membranseiten. Dies wäre nicht möglich, wenn die Passung spielbehaftet wäre.

Daraus resultiert, daß - je nach den Bedürfnissen - weniger oder schwächer dimensionierte Spannschrauben 25 verwendet werden können oder eine solche Kupplung mit nicht verminderter Schraubenzahl oder -dimension eine beträchtlich höhere Betriebssicherheit aufweist, als dies bei einer Kupplung mit einfacher Verschraubung der Membran der Fall wäre.

## Patentansprüche

1. Wellenkupplung zum Ausgleich radialer, axialer und winkliger Verlagerungen der angeschlossenen Wellen (31, 32), mit wenigstens einem biegeelastischen Ausgleichselement in Form einer aus zwei in Serie geschalteten scheiben- bzw. ringförmigen, an ihren Außenumfangsbereichen lösbar miteinander verbunden Membranen (19, 20) dadurch gebildeten Tandemmembran, daß die in Axialrichtung der Kupplung (10) im wesentlichen parallel zueinander angeordneten Membranen (19, 20) an einem Außenumfangsbereich fest miteinander verbunden und mit ihrem jeweiligen Innenumfangsbereich an eines der beiden relativ zueinander verlagerbaren Maschinenelemente angeschlossen sind, dadurch gekennzeichnet, daß wenigstens eine der beiden Membranen (19; 20) einer Tandemmembran (19, 20) mittels einer axialverspannbaren Spannbuchsenanordnung an das zugehörige Kupplungsteil (16; 31; 32) wie Nabe, Flansch od.dgl. angeschlossen ist und daß die Spannbuchsen (27) jeweils einen Hülsenabschnitt (28) und einen endseitig daran angeformten flachen Anschlagbund (29) aufweisen und axial derart in Bohrungen der Membran (19; 20) eingesetzt sind, daß ihre Anschlagbunde (29) auf der zur anderen Membran (20; 19) weisenden Seite liegen.

2. Wellenkupplung nach Anspruch 1, dadurch gekennzeichnet, daß jede Spannbuchse (27) ein Innengewinde zur verstellbaren Aufnahme einer Spannschraube (25) aufweist und ihr Mantel mit einer Spannhülsenaufnahme, gegen die sich der Kopf der Spannschraube (25) mindestens mittelbar druckschlüssig abstützt, eine spielfreie Passung bildet.

3. Wellenkupplung nach Anspruch 2, dadurch gekennzeichnet, daß die Spannhülsenaufnahmen unmittelbar in dem zugehörigen Kupplungsteil, z. B. einem Nabenflansch (31a; 33a; 33b; 32a), selbst ausgebildet sind.

4. Wellenkupplung nach Anspruch 2, dadurch gekennzeichnet, daß die Spannhülsenaufnahmen in einer als Abstandshalter zwischen Membran (19) und Kupplungsteil (16) dienenden und mittels der Spannschrauben (25) am Kupplungsteil (16) verspannbaren Ringscheibe (26) ausgebildet sind.

5. Wellenkupplung nach Anspruch 1 oder einem der darauf folgenden, dadurch gekennzeichnet, daß die radial inneren Spannschrauben der beiden Einzelmembranen (19; 20) einer Tandemmembran (19, 20) auf derart unterschiedlichen Teilkreisen angeordnet sind, daß auf zueinander weisenden Membranseiten derselben Tandemmembran befindliche Teile der Membranbefestigungsmittel keine Überdeckung in Radialrichtung aufweisen.

6. Wellenkupplung nach Anspruch 5 in Gestalt einer Gelenkwelle mit einem insbesondere rohrförmigen Verbindungsstück (33) zwischen zwei Kupplungsanordnungen (14 bzw. 14'), dadurch gekennzeichnet, daß die an dem Verbindungsstück (33) angeschlossenen Membranen (29) gegenüber den jeweils beiden anderen Membranen (19) die radial weiter innen angeordneten Anschlußbereiche aufweisen.

7. Wellenkupplung nach einem oder mehreren der Ansprüche 1 bis 4, dadurch gekennzeichnet, daß die beiden Einzelmembranen (19; 20) einer Tandemmembran (19, 20) im wesentlichen gleiche Radialabmessungen und die zugeordneten Spannschrauben (25) dementsprechend auf im wesentlichen gleichen Teilkreisen liegen, diese jedoch in Umfangsrichtung derart gegeneinander versetzt angeordnet sind, daß auf zueinander weisenden Membranseiten derselben Tandemmembran befindliche Teile der Membranbefestigungsmittel keine Überdeckung in Umfangsrichtung aufweisen.

8. Wellenkupplung nach Anspruch 1 oder einem der darauf folgenden, insbesondere nach Anspruch 6 oder 7, dadurch gekennzeichnet, daß wenigstens einige der Spannschrauben (25), insbesondere der am Verbindungsstück (33) angreifenden Spannschrauben, einen verlängerten Schraubenschaft aufweisen, der in Axialüberdeckung mit einem radial außenliegenden Überdeckungsabschnitt (z.B. Flansch 31a) des an der anderen Membran angeschlossenen Kupplungsteiles (z.B. 31) tritt.

9. Wellenkupplung nach Anspruch 8, dadurch gekennzeichnet, daß das an der anderen Membran angeschlossene Kupplungsteil mit Ausnehmungen bzw. Bohrungen (34; 35) zum freien Eingriff der verlängerten Schraubenschäfte versehen ist.

10. Wellenkupplung nach Anspruch 1 oder einem der darauf folgenden, dadurch gekennzeichnet, daß die beiden Membranen (19; 20) jeweils aus einer dünnen, ebenen Metall-, insbesondere Stahlringscheibe bestehen.

11. Kupplungssystem unter Verwendung einer Kupplung nach Anspruch 1 oder einem der folgenden Ansprüche, welches sowohl zum Ausgleich radialer, axialer und winkliger Verlagerungen der angeschlossenen Wellen geeignet als auch gleichzeitig hoch drehelastisch ist, dadurch gekennzeichnet, daß eine Membran (19) der Tandemmembrankupplung (19, 20) am Flansch (16) einer an sich bekannten Gummiringkupplung (13), zu dieser in Serie geschaltet, befestigt ist.

12. Kupplungssystem unter Verwendung von Kupplungen nach Anspruch 1 oder einem der folgenden Ansprüche, welches sowohl zum Ausgleich radialer, axialer und winkliger Verlagerungen der angeschlossenen Wellen geeignet als auch gleichzeitig hoch drehelastisch ist, dadurch gekennzeichnet, daß eine Membran (19) einer ersten Tandemmembrankupplung (19, 20) am Flansch (16) einer an sich bekannten, am Antriebsaggregat angeschlossenen Gummiringkupplung (13), zu dieser in Serie geschaltet, befestigt ist, daß eine zweite Membran (19) einer zweiten Tandemmembrankupplung (19, 20) an die Welle des abtriebsseitigen Maschinenaggregats und die beiden mittleren Membranen (20) der beiden Tandemmembrankupplungen (19, 20) an ein diese drehstarr miteinander kuppelndes Verbindungsstück (33) angeschlossen sind.

## Claims

1. Shaft coupling for compensating radial, axial and angular displacements of the connected shafts (31, 32), having at least one flexible compensating element in the form of a tandem diaphragm, which is so formed by two serially connected disk-shaped or annular diaphragms (19, 20) detachably connected to one another at their outer peripheral regions that the diaphragms (19, 20), which are disposed in an axial direction of the coupling (10) substantially parallel to one another, are firmly connected to one another at an outer peripheral region and are connected by their respective inner peripheral region to one of the two machine elements which are to be displaceable relative to one another, characterized in that at least one of the two diaphragms (19; 20) of a tandem diaphragm (19, 20) is connected by means of an axially braceable clamping bush arrangement to the associated coupling part (16; 31; 32) such as a hub, flange or the like, and that the clamping bushes (27) each comprise a sleeve portion (28) with a flat stop collar (29) formed on the end thereof and are axially inserted into bores in the diaphragm (19; 20) in such a way that their stop collars (29) rest against the side directed towards the other diaphragm (20; 19).

2. Shaft coupling according to claim 1, characterized in that each clamping bush (27) has an internal thread for adjustably receiving a clamping screw (25) and its lateral surface together with a clamping sleeve receiver, against which the head of the clamping screw (25) is supported at least indirectly in a pressure-locked manner, forms a tight fit.

3. Shaft coupling according to claim 2, characterized in that the clamping sleeve receivers are formed directly in the associated coupling part itself, e.g. in a hub flange (31a; 33a; 33b; 32a).

4. Shaft coupling according to claim 2, characterized in that the clamping sleeve receivers are formed in an annular disk (26) serving as a spreader between the diaphragm (19) and the coupling part (16) and braceable by means of the clamping screws (25) on the coupling part (16).

5. Shaft coupling according to claim 1 or one of the subsequent claims, characterized in that the radially inner clamping screws of the two individual diaphragms (19; 20) of a tandem diaphragm (19, 20) are disposed on graduated circles which differ in such a way that parts of the diaphragm fastening means situated on diaphragm sides of the same tandem diaphragm which are directed towards one another have no overlap in a radial direction.

6. Shaft coupling according to claim 5 in the form of a cardan shaft with an, in particular, tubular connecting piece (33) between two coupling arrangements (14 or 14'), characterized in that the diaphragms (29) connected to the connecting piece (33) have the connecting regions which are disposed radially further in than the respective other two diaphragms (19).

7. Shaft coupling according to one or more of claims 1 to 4, characterized in that the two individual diaphragms (19; 20) of a tandem diaphragm (19, 20) [have] substantially identical radial dimensions and the associated clamping screws (25) accordingly lie on substantially identical graduated circles, the latter however being arranged offset in a peripheral direction relative to one another in such a way that parts of the diaphragm fastening means situated at diaphragm sides of the same tandem diaphragm which are directed towards one another have no overlap in a peripheral direction.

8. Shaft coupling according to claim 1 or one of the subsequent claims, in particular according to claim 6 or 7, characterized in that at least some of the clamping screws (25), in particular the clamping screws acting upon the connecting piece (33), have a lengthened screw shank which comes to axially overlap a radially outer-lying overlap portion (e.g. flange 31a).of the coupling part (e.g. 31) connected to the other diaphragm.

9. Shaft coupling according to claim 8, characterized in that the coupling part connected to the other diaphragm is provided with recesses or bores (34; 35) for the free engagement of the lengthened screw shanks.

10. Shaft coupling according to claim 1 or one of the subsequent claims, characterized in that the two diaphragms (19; 20) each comprise a thin, flat, metal - in particular, steel - annular disk.

11. Coupling system using a coupling according to claim 1 or one of the subsequent claims, which is both suitable for compensating radial, axial and angular displacements of the connected shafts and at the same time is torsionally highly flexible, characterized in that one diaphragm (19) of the tandem diaphragm coupling (19, 20) is fastened to the flange (16) of a known rubber ring coupling (13) serially connected thereto.

12. Coupling system using coupling according to claim 1 or one of the subsequent claims, which is both suitable for compensating radial, axial and angular displacements of the connected shafts and at the same time is torsionally highly flexible, characterized in that one diaphragm (19) of a first tandem diaphragm coupling (19, 20) is fastened to the flange (16) of a known rubber ring coupling (13) serially connected thereto and connected to the drive unit, that a second diaphragm (19) of a second tandem diaphragm arrangement (19, 20) is connected to the shaft of the output-end machine unit and the two middle diaphragms (20) of the two tandem diaphragm couplings (19, 20) are connected to a connecting piece (33), which couples the latter in a torsionally rigid manner to one another.

## Revendications

1. Accouplement d'arbres destiné à compenser des déplacements radiaux, axiaux et angulaires des arbres raccordés (31, 32), comprenant au moins un élément de compensation élastique à la flexion sous la forme d'une membrane double qui est formée à partir de deux membranes (19, 20) en forme de disques ou de couronnes, respectivement, celles-ci étant montées en série et reliées entre elles d'une manière amovible dans les régions de leurs pourtours extérieurs, du fait que les membranes (19, 20), lesquelles sont disposées pour l'essentiel parallèlement entre elles dans la direction axiale de l'accouplement (10), sont reliées rigidement entre elles dans une région de leur pourtour extérieur, et qu'elles sont raccordées par la région respective de leur pourtour intérieur à l'un des deux éléments de la machine qui peuvent être déplacés l'un par rapport à l'autre, caractérisé par le fait qu'au moins l'une des deux membranes (19 ; 20) d'une membrane double (19, 20) est raccordée à la partie associée de l'accouplement (16 ; 31 ; 32) comme un moyeu, une bride ou similaire au moyen d'un dispositif à douille de serrage qui peut être serré dans le sens axial, et par le fait que les douilles de serrage (27) comportent chacune une partie en forme de manchon (28) et un collet plat formant butée (29) qui est formé sur elles du côté de leur extrémité, et qu'elles sont introduites axialement dans des perçages de la membrane (19 ; 20) d'une manière telle que leurs collets formant butées (29) portent sur le côté qui est tourné vers l'autre membrane (20 ; 19).

2. Accouplement d'arbre selon la revendication 1, caractérisé par le fait que chaque douille de serrage (27) présente un filetage intérieur qui est destiné à recevoir une vis de serrage (25) d'une manière amovible, et que sa surface latérale constitue un ajustement sans jeu avec un logement qui est destiné à la douille de serrage et contre lequel la tête de la vis de serrage (25) s'appuie par conjugaison des pressions, de moins indirectement.

3. Accouplement d'arbre selon la revendication 2, caractérisé par le fait que les logements destinés aux vis de serrage sont ménagés directement dans la pièce d'accouplement associée elle-même, celle-ci étant par exemple une bride de moyeu (31a ; 33a ; 33b ; 32a).

4. Accouplement d'arbre selon la revendication 2, caractérisé par le fait que les logements destinés aux vis de serrage sont ménagés dans une couronne annulaire (26) qui peut être serrée sur la partie d'accouplement (16) au moyen des vis de serrage (25) et qui sert d'entretoise entre la membrane (19) et la partie d'accouplement (16).

5. Accouplement d'arbre selon la revendication ou l'une des suivantes, caractérisé par le fait que les vis de serrage des deux membranes individuelles (19 ; 20) d'une membrane double (19, 20) qui sont à l'intérieur dans le sens radial sont disposées sur des cercles primitifs différant entre eux d'une manière telle que des parties des moyens de fixation des membranes qui se trouvent sur des côtés de membranes tournés l'un vers l'autre de la même membrane double ne présentent pas de recouvrement dans la direction radiale.

6. Accouplement d'arbre selon la revendication 5 sous la forme d'un arbre articulé comprenant une pièce de liaison (33), en particulier tubulaire, entre deux dispositifs d'accouplement (14, respectivement 14'), caractérisé par le fait que les membranes (20) qui sont raccordées à la pièce de liaison (33) présentent à chaque fois par rapport aux deux autres membranes (19) les zones de raccordement qui sont disposées le plus loin vers l'intérieur dans le sens radial.

7. Accouplement d'arbre selon une ou plusieurs des revendications 1 à 4, caractérisé par le fait que les deux membranes individuelles (19 ; 20) d'une membrane double (19, 20) présentent pour l'essentiel des dimensions égales dans le sens radial, et que les vis de serrage associées (25) sont situées en conséquence sur des cercles primitifs qui sont égaux pour l'essentiel, mais qu'elles sont disposées en étant décalées entre elles dans la direction du pourtour d'une manière telle que des parties des moyens de fixation des membranes qui se trouvent sur des côtés de membranes tournés l'un vers l'autre de la même membrane double ne présentent pas de recouvrement dans la direction du pourtour.

8. Accouplement d'arbre selon la revendication 1 ou l'une des suivantes, et en particulier selon la revendication 6 ou 7, caractérisé par le fait qu'au moins quelques-unes des vis de serrage (25), et en particulier des vis de serrage qui viennent en prise avec la pièce de liaison (33), présentent une tige de vis prolongée qui vient en recouvrement dans le sens axial avec une partie de recouvrement située à l'extérieur dans le sens radial (par exemple la bride 31a) de la partie d'accouplement (par exemple 31) qui est raccordée à l'autre membrane.

9. Accouplement d'arbre selon la revendication 8, caractérisé par le fait que la partie d'accouplement qui est raccordée à l'autre membrane est pourvue d'évidements ou de perçages (34 ; 35), respectivement, en vue de la venue en prise libre des tiges de vis prolongées.

10. Accouplement d'arbre selon la revendication 1 ou l'une des suivantes, caractérisé par le fait que les deux membranes (19 ; 20) sont constituées chacune par un disque annulaire mince et plan en métal, et en particulier en acier.

11. Système d'accouplement utilisant un accouplement selon la revendication 1 ou l'une des revendications suivantes qui est apte à compenser des déplacements radiaux, axiaux et angulaires des arbres raccordés, tout en étant en même temps fortement élastique en rotation, caractérisé par le fait qu'une membrane (19) de l'accouplement à membrane double (19, 20) est fixée à la bride (16) d'un accouplement à couronne en caoutchouc (13) connu en lui-même, en étant montée en série avec celui-ci.

12. Système d'accouplement utilisant un accouplement selon la revendication 1 ou l'une des revendications suivantes qui est apte à compenser des déplacements radiaux, axiaux et angulaires des arbres raccordés, tout en étant en même temps fortement élastique en rotation, caractérisé par le fait qu'une membrane (19) d'un premier accouplement à membrane double (19, 20) est fixée à la bride (16) d'un accouplement à couronne en caoutchouc (13) qui est connu en lui-même et qui est raccordé à l'ensemble d'entraînement, en étant montée en série avec celui-ci, et par le fait qu'une deuxième membrane (19) d'un deuxième accouplement à membrane double (19, 20) est fixée à l'arbre de l'ensemble de la machine situé du côté de la sortie, et que les deux membranes centrales (20) des deux accouplements à membrane double (19, 20) sont raccordées à une pièce de liaison (33) qui les accouple entre elles d'une manière solidaire en rotation.
